Europäisches Patentamt

European Patent Office

Office européen des brevets

(11) Publication number: **0 065 515**
**B1**

(19)

# EUROPEAN PATENT SPECIFICATION

(12)

(45) Date of publication of patent specification: **30.04.86**

(51) Int. Cl.⁴: **B 05 B 17/06**

(21) Application number: **81901026.5**

(22) Date of filing: **10.11.80**

(86) International application number:
**PCT/US80/01502**

(87) International publication number:
**WO 82/01669 27.05.82 Gazette 82/14**

(54) STABLE VORTEX GENERATING DEVICE.

(43) Date of publication of application:
**01.12.82 Bulletin 82/48**

(45) Publication of the grant of the patent:
**30.04.86 Bulletin 86/18**

(84) Designated Contracting States:
**AT CH DE FR GB LI NL SE**

(56) References cited:
**US-A- 970 382**
**US-A-1 411 513**
**US-A-3 058 669**
**US-A-3 648 932**
**US-A-4 109 862**
**US-A-4 189 101**

(73) Proprietor: **VORTECH SCIENCES INC.**
**1934 Sonora Road**
**Palm Springs, CA 92262 (US)**

(72) Inventor: **HUGHES, Nathaniel**
**1934 Sonora Road**
**Palm Springs, CA 92262 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath Maximilianstrasse 58**
**D-8000 München 22 (DE)**

Courier Press, Leamington Spa, England.

EP 0 065 515 B1

## Description

This application is a continuation-in-part of US—A—4 189 101, which is a continuation-in-part of US—A—4,109,862. The disclosures of these related applications are incorporated fully herein by reference.

This invention relates to fluid vortex generation and, more particularly, to an improved vortex generating device useful as an atomizer and/or a sonic energy or flow transducer.

In one class of sonic energy transducer, sonic waves are generated by accelerating a gas to supersonic velocity in a nozzle. To achieve supersonic flow it has been necessary in the past to establish a large pressure drop from the inlet to the outlet of the nozzle. In order to produce sufficiently high energy levels for effective atomization and other purposes, prior art sonic energy transducers have used various measures such as a resonator beyond the outlet of the supersonic nozzle, as disclosed in US—A—3,230,924, which issued January 25, 1966, or a sphere in the diverging section of the supersonic nozzle, as disclosed in US—A—3,806,029, which issued April 23, 1974.

By means of stable, efficient vortex generation, the device disclosed in US—A—4,109,862 and US—A—4 189 101 produces supersonic flow and higher energy levels with a lower pressure drop than prior art devices employing supersonic nozzles. Resonators or spheres are not required to produce high energy levels with the invention, although they may be advantageously employed to increase the level of energization under some circumstances.

The present invention is directed to improvements in a vortex generating device wherein a flow passage aligned with a flow axis is connected between a fluid inlet and a fluid outlet, and a plurality of tornado-like gas vortices are generated in the flow passage in an annular arrangement around the flow axis; the vortices also rotate about the flow axis.

A stable vortex generating device of this kind is known from US—A—4 189 101 comprising a flow passage having a restriction, which is connected between a fluid inlet and outlet. A bluff body such as a frustum or disc is disposed in the flow passage between the inlet and the restriction. The inlet is transverse to the axis of the flow passage. The bluff body is mounted on a rod extending through the flow passage. In one embodiment, a sphere is mounted on the end of the rod beyond the outlet. The rod may be hollow and have holes near the restriction for the purpose of liquid feed. As fluid entering the inlet passes the rod and bluff body to the restriction, a vortex is generated. This stable vortex generating device has the drawback that only one flow passage is provided, in which a bluff body is disposed. In such a device, it is not ensured that under all working conditions, this device generates a stable vortex because of influences caused by the change of the flow direction of the gas stream after entering the device.

In particular, the present invention is directed to a vortex generating device having a main flow passage having a flow axis, a fluid inlet connected with the flow passage under an angle with respect to the flow axis, a restriction located in the downstream end of the flow passage and defining an outlet opening into a region at ambient pressure, and a rod extending along the flow axis, characterized in that at least one auxiliary flow passage connects the main flow passage to the opening in the restriction, whereby vortices move along the rod and flow axis and through the auxiliary flow passage to meet in the opening.

The auxiliary flow passages compensate for changes in conditions in the device, thereby requiring fewer adjustments, generate further vortices, and produce a fan-shaped atomizing pattern when the device is used for liquid atomization.

Furthermore, the present invention is directed to a vortex generating device having a main flow passage having a flow axis, the main flow passage having an upstream and a downstream portion, a fluid inlet connected with the upstream portion under an angle with respect to the flow axis, a restriction located in the downstream portion and defining an outlet, opening into a region at ambient pressure, and a rod extending along the flow axis, characterized in that the main flow passage includes an intermediate section at its downstream end of smaller cross-section than the upstream portion and of larger cross-section than the fluid outlet.

According to one aspect of the invention, an inlet restriction is formed in the fluid inlet and a source of gas under sufficient pressure to cause sonic velocity at the restriction is connected to the inlet. Consequently, there exists in the flow passage sonic flow conditions that enhance the vortex action.

According to another aspect of the invention, a fluid outlet has a convave semispherical surface opening into an ambient region. This semispherical section facilitates bidirectional, i.e. reciprocating, flow between the flow passage and the ambient region, which further enhances the vortex action. Atmospheric implosion of air causes the abrupt discontinuity of pressure and density which along with similar effects in the rods, frustums, drag bodies and their related aerodynamic drag forces, create these high speed vortex zones and vortex vacuums. Without the constant and large energy potentials of the ambient atmosphere into which these devices discharge there would be no vortex phenomenon present or possible. By the exposition of the vortex device discharge zones to efficient contact and/or availability of ambient caused gas velocity these phenomena are enhanced.

According to another aspect of the invention, a first annulus is formed in the flow passage by a rod in alignment with the flow passage, and a second annulus is formed in the flow passage by the rod and a reduction in cross-sectional area of the flow passage. A source of atomizing gas under pressure and a source of liquid under pressure to be atomized are both connected to the fluid inlet to cause the gas and the liquid to pass through the inlet together. The result is an effective atomizer at low gas pressure and/or small liquid flow rate.

According to another aspect of the invention, a pair of flow passages connect the main flow passage to the opening in the restriction to enhance the formation of vortices at the outlet.

According to another aspect of the invention, the flow passages open into the restriction from diametrically opposite directions.

According to another aspect of the invention, at least one auxiliary passageway interconnects the main flow passage and the outlet such that energy is applied to the gas at an angle with respect to the direction in which the gas passes through the outlet.

According to another aspect of the invention, the auxiliary flow passages open into the restriction transverse to the flow axis.

According to another aspect of the invention, the auxiliary flow passages open into the upstream portion of the main flow passage in directions parallel to the flow axis.

According to another aspect of the invention, a conical vortex collection section is located adjacent the downstream end of the main flow passage.

According to another aspect of the invention, the restriction is a cylindrical section, comprising the conical vortex collecting section, the auxiliary flow passages opening into the upstream portion of the main flow passage through the conical vortex collecting section.

According to another aspect of the invention, the rod ends at the conical vortex collecting section.

According to another aspect of the invention, the rod ends at the outlet.

According to another aspect of the invention, the rod is solid.

According to another aspect of the invention, the rod is hollow for admitting a liquid to the device.

According to another aspect of the invention, the device additionally comprises a concave outlet section.

According to another aspect of the invention, the concave outlet section diverges and communicates with the outlet.

According to another aspect of the invention, the rod extends beyond the concave outlet section.

According to another aspect of the invention, the fluid inlet includes a restriction and the pressure of the fluid at the inlet is sufficient to cause the fluid to flow through the restriction at sonic velocity.

According to another aspect of the invention, the restriction communicates with a concave semispherical inlet section.

According to another aspect of the invention, a bluff body is located on the rod at a location between the inlet and the restriction.

According to another aspect of the invention, the rod is hollow with the downstream end having a cylindrical opening for emitting a liquid to be atomized.

According to another aspect of the invention, a liquid and a gas are applied to the inlet together.

According to another aspect of the invention, there is a restriction at the fluid inlet.

According to another aspect of the invention, the pressure of the gas is sufficiently larger than the ambient pressure to cause the gas to pass through the inlet at sonic velocity.

According to another aspect of the invention, the rod extends through the upstream portion and through only part of the intermediate section.

An important feature of the invention is the combination of shock wave formation and vortex generation in a gas stream, which permits exceptional atomization of liquids.

The features of specific embodiments of the best mode contemplated of carrying out the invention are illustrated in the drawings, in which:

FIG. 1 is a side sectional view of one embodiment of a vortex generating device incorporating principles of the invention;

FIG. 2 is a side sectional view of a modification of the device of FIG. 1;

FIG. 3 is a side sectional view of another modification of the device of FIG. 1;

FIG. 4 is a side sectional view of still another modification of the device of FIG. 1;

FIGS. 5A and 5B are side sectional and end sectional views, respectively, of another embodiment of a vortex generating device incorporating principles of the invention;

FIG. 6 is a side sectional view of still another embodiment of a vortex generating device incorporating principles of the invention;

Like reference numerals are used to identify the same components in the different figures of the drawings. Only those components actually discussed in connection with a figure are identified by reference numerals, it being assumed the unidentified components are the same as those shown in previously discussed figures.

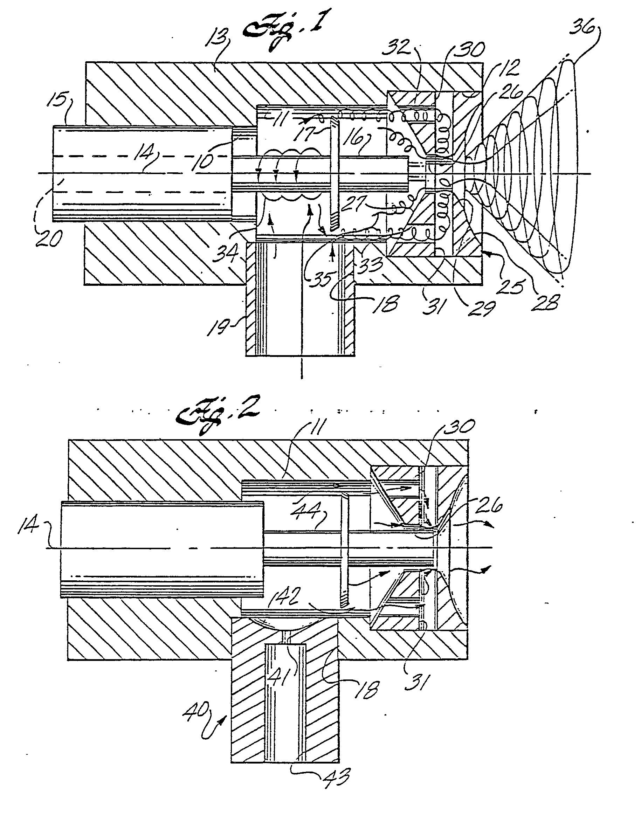

In FIG. 1, a cylindrical bore 10, a cylindrical counterbore 11, and a larger cylindrical counterbore 12 extend through a body member 13 from end to end in alignment with an axis 14. A cylindrical plug 15 fits in bore 10. A hollow rod 16, part of which fits in a bore 20 through plug 15, extends from one end of plug 15 completely through counterbore 11 and into counterbore 12 in alignment with axis 14. Rod 16 is secured to plug 15 by a force fit, welding, or the like. Once the position of plug 15 is set, it is fixed within bore 10 by a set screw, welding, or the like, so rod 16 cannot move. A truncated frustum 17 is fixedly mounted on rod 16 within counterbore 11 in alignment with axis 14. The base of frustum 17 faces toward bore 10. A bore 18 is formed in body member 13 in alignment with an inlet axis perpendicular to axis 14 so as to open into counterbore 11. A cylindrical inlet pipe section 19 fits into bore 18 to form a fluid inlet. A cylindrical insert 25 fits in counterbore 12. Insert 25 has in alignment with axis 14 a cylindrical bore 26, a concave conical surface 27 on the side of bore 26 opening toward rod 16, and a concave semispherical outlet surface 28 on the side of bore 26 opening away from rod 16. Bore 26 could be either larger or smaller in diameter than rod 16. Surface 28 forms a fluid outlet. A shallow concave conical surface 29 is formed where surface 28 joins the edge of bore 26. Rod 16 has an open end facing toward bore 26 in close proximity thereto. Radial bores 30 and 31 extend through insert 25 from its periphery to bore 26 into which they open from diametrically opposite directions. In other words, bores 30 and 31 are axially aligned with each other. Bores 32 and 33 extend through insert 25 parallel to axis 14 between surface 27 and bores 30 and 31, respectively.

Bore 11 and counterbore 12 together comprise a main flow passage from the fluid inlet to the fluid outlet; bore 11 comprises an upstream portion thereof; and counterbore 12 comprises a downstream portion thereof. Axis 14 comprises a flow axis, with which the flow passage is aligned. Bore 26 comprises a restriction in the downstream portion of the main flow passage. Bores 32 and 30 comprise one auxiliary flow passage from the upstream portion of the main flow passage to the restriction, and bores 33 and 31 comprise another auxiliary flow passage from the upstream portion of the main flow passage to the restriction. Frustum 17 comprises a bluff body. Surface 27 comprises a vortex collecting section for coupling the upstream portion of the main flow passage to the restriction, and surface 29 comprises a diverging section coupling the restriction to surface 28, which comprises a semispherical outlet section.

In operation, air or other atomizing gas under pressure is supplied to the fluid inlet. This gas impinges upon rod 16 and frustum 17 in the upstream portion of the main flow passage, spins around rod 16 as represented at 34, and forms a plurality of tornado-like vortices in a ring as the gas flows around the periphery of the bluff body toward the downstream portion of the main flow passage, as represented at 35. As described in US—A—4 189 101, the ring of vortices formed at the periphery of frustum 17 also rotates en masse around axis 14. The division of the flow of the vortex forming stream that takes place around rod 16, between the restriction and the auxiliary flow passages, is a function of diameter of the restriction, rod position, and operating flow rates and pressures. The flow therethrough tends to be self adjusting. In many cases, the majority of the flow passes around the end of rod 16 and along the flow axis through the restriction. The remainder of the vortex forming gas flows through the auxiliary flow passages to combine with the majority at the center of the restriction. The components of the vortex forming gas containing vortices are thus focused at the center of the restriction in a manner analogous to the focusing of light by a lens. A single oblong vortex emanates from the outlet as represented at 36. A source of a liquid to be atomized such as, for example, paint, is connected to the hollow interior of rod 16. A subatmospheric pressure is generated somewhere in the vicinity of the restriction. In some cases, the liquid is not under pressure and the vacuum created draws the liquid out of the open end of rod 16 adjacent to bore 26 into the vortex forming gas. In other cases, the liquid is under pressure. As the gas moves through the described device, it atomizes the liquid and produces a finely atomized spray at the outlet in the oblong vortex 36.

The auxiliary passages perform three functions. First, they compensate for changes in operating conditions such as pressure and flow rate, thereby making adjustments unnecessary in many cases. Second, they enhance the vortex action in the device and thus its atomizing power. Third, the auxiliary passages form a fan-shaped spray at the outlet in the plane in which the axes of the auxiliary passages lie. To perform this function, or at least to form a symmetrical fan-shaped pattern and the self-compensating control function, a pair of diametrically opposite auxiliary passages, as shown, are preferred. Complex vortex forming, momentum balancing, and velocity and pressure exchange phenomena take place between the restriction and the two auxiliary passages.

Rotational phenomena cannot be analyzed or understood by the laws of linear flow, Newtonian kinetics. Very little is known in the present state-of-the-art of vortex phenomena and interchange between these phenomena and linear flow relationships. What is known in this invention is that a balanced pair of auxiliary passages related in area to the restriction and downstream of a transverse feed intersecting a rod will perform the functions of vortex forming and focusing, self compensation and vortex phenomenon enhancement (higher spin velocities, greater vacuum) resulting in superior atomization and/or higher sonic energy generation.

The diverging semispherical outlet facilitates bilateral, i.e., reciprocating, gas flow which, it is believed, is an integral part of the vortex formation process. It is accordingly believed that this process is substantially enhanced by the provision of such an outlet. Although not indispensable, the vortex collecting section, i.e., surface 27, and the diverging section, i.e., surface 29, are desirable as aids to obtain higher gas velocity out of the restriction.

All of the rules stated for the most efficient operation in US—A—4 189 101 are here applicable. To obtain a broad range of different flow characteristics, it is only necessary to change the diameter of the restriction, leaving the remaining dimensions the same. In a typical example, the device of FIG. 1 would have the following dimensions: diameter of bore 10 — 4.762 mm; diameter of counterbore 11 — 7.925 mm; diameter of counterbore 12 — 9.525 mm; diameter of rod 16 — 1.727 mm; upstream, i.e., base, diameter of frustum 17 — 7.112 mm; thickness of frustum 17 — 0.813 mm; angle between edge surface of frustum 17 and axis 14 — 15°; length of bore 11 — 10.312 mm; length of counterbore 12 — 4.826 mm; protrusion of rod 16 into counterbore 12 — 1.016 mm; diameter of bore 26 — 1.778 mm; distance from upstream face of frustum 17 to end of rod 16 — 5.08 mm; inside diameter of section 19 — 7.925 mm; distance from inlet axis to junction of counterbores 11 and 12 — 6.35 mm; length of bore 26 — 2.286 mm; diameter of bores 30 through 33 — 1.778 mm; distance from the upstream end of hole 26 to the center of holes 30 and 31 — 1.143 mm; angle between conical surface 27 and axis 14 — 60°; length of surface 27 along axis 14 — 2.032 mm; angle between surface 29 and axis 14 — 60°; length of surface 29 along axis 14 — 0.356 mm; radius of surface 28 — 19.812 mm; and length of surface 28 along axis 14 — 0.686 mm. The pressure of the gas supplied to the inlet would be 1034.25 hPa.

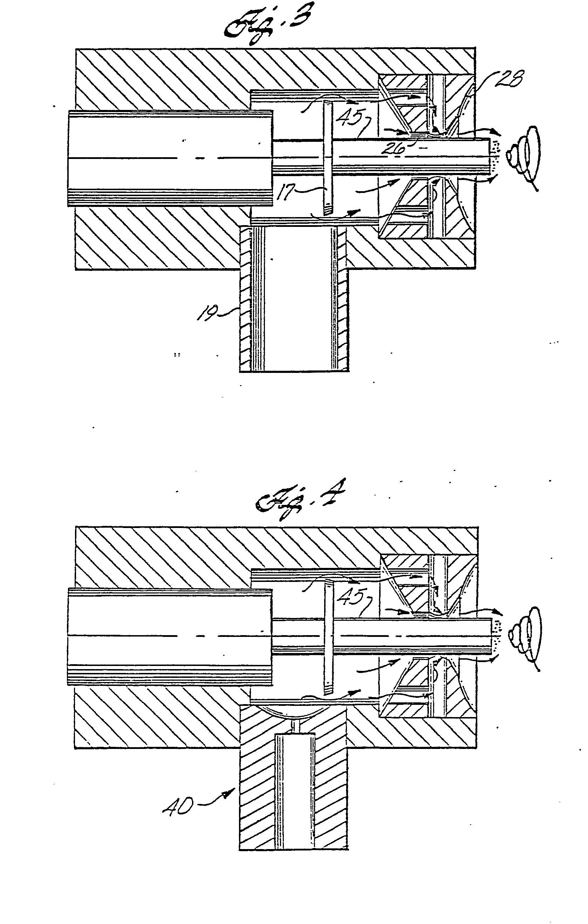

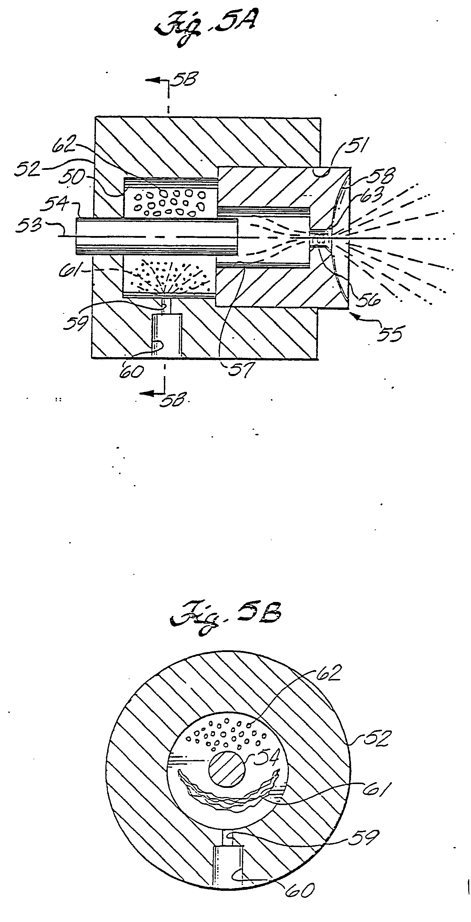

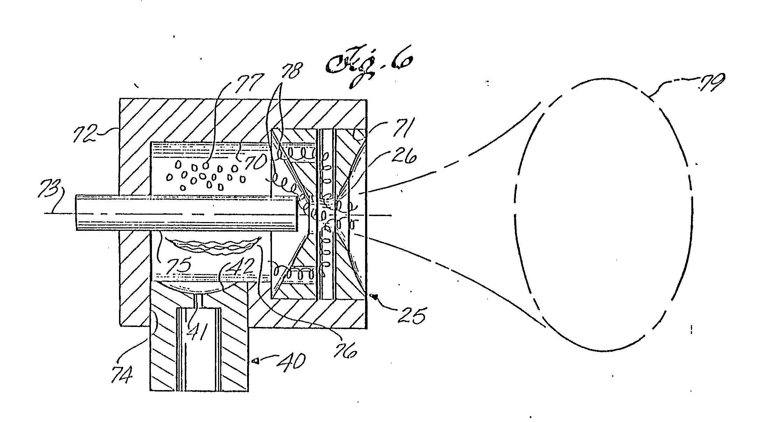

FIG. 2 shows a modification of the device of FIG. 1. Specifically, instead of inlet pipe section 19, a cylindrical inlet member 40 fits in bore 18. Member 40 has aligned with an inlet axis perpendicular to axis 14 a small bore 41, which functions as a restriction in inlet member 40 a concave semispherical surface 42 opening from one end of bore 41 into bore 11, and a counterbore 43 extending from the other end of bore 41. Bore 41 comprises a cylindrical upstream section, and surface 42 comprises a diverging downstream section. Gas and liquid under pressure are both supplied to the device through inlet member 40. Although in the device disclosed in FIG. 1, the ratio of the pressure of the gas supplied to the inlet to the ambient pressure could be either larger or smaller than the critical pressure ratio, when a restriction is formed in the inlet, as in FIG. 2, it is preferred that the supply gas pressure is selected so that the pressure ratio between the region of counterbore 43 and counterbore 11 is equal to or greater than the critical pressure ratio to cause gas flow through the restriction at sonic velocity. Any velocity increase, even if not to sonic velocity, at the gas inlet results in formation of a larger number of vortices, and thus greater vortex action in the final focused restriction. If sonic velocity is achieved as discussed below, further energization through shock formation is attained. The combination of shock wave energies along with high speed vortex energy is particularly effective in the resultant atomization. The beneficial consequences of sonic flow conditions in the main flow passage are discussed below in connection with the embodiment of FIGS. 5A and 5B, and the embodiment of FIG. 6. Instead of rod 16 in FIG. 1, a rod 44 is provided that has a slightly smaller diameter than bore 26. Rod 44 extends into bore 26 partially across the region where bores 30 and 31 open into bore 26. This modification produces a particularly effective fan-shaped spray and very great vortex action, by virtue of the transverse gas flow impingement against rod 16 from bores 30 and 31, when high gas pressure is available.

In a typical example, in addition to the dimensions given above in connection with FIG. 1, where applicable, the device of FIG. 2 would have the following dimensions: diameter of bores 26 and 41 — 1.778 mm; length of bore 41 — 1.016 mm; diameter of bore 43 — 2.794 mm; radius of surface 42 — 11.113 mm; length of surface 42 along the inlet axis — 0.762 mm; diameter of rod 44 — 1.753 mm; protrusion of rod 44 into bore 26 — 1.524 mm. The pressure of the gas and liquid supplied to the inlet would be 1379 hPa.

FIG. 3 is another modification of the device of FIG. 1. Instead of rod 16, a rod 45 having a smaller diameter than hole 26 is provided. Rod 45 extends completely through the flow passage to a point beyond the outlet of the device. Liquid to be atomized is fed to the gas at the end of rod 45 in mid air outside the device beyond the outlet, where good atomization takes place. It is noteworthy that a large subatmospheric pressure, e.g., 68.95—103.43 hPa exists at the end of rod 45 beyond the outlet. In the most violent natural vortex having massive destructive power, namely, a tornado or hurricane, a pressure differential between the core and the outside of about 1 psig maximum exists. By contrast, the microcosmic process disclosed herein creates 68.95 to 103.43 hPa. Typically, in addition to the dimensions given above in connection with FIG. 1, where applicable, the device of FIG. 3 would have the following dimensions: diameter of rod 45 — 1.727 mm; protrusion of rod 45 beyond the plane of the periphery of surface 28 — 0.762 mm; distance from upstream face of frustum 17 to the end of rod 45 — 7.62 mm; and diameter of bore 26 — 1.981 mm. The vacuum generated in this embodiment is related to the weight flow of gas passing through this device in a relationship as the weight flow changes. Specifically, the change in vacuum generated externally is as the square of the weight flow change. This has application to flow sensing and transduction. The same applies to the vacuum weight flow relationship, as in the other devices described herein or in other copending applications.

The modification of FIG. 4 is identical to that of FIG. 3 except that inlet member 40 from FIG. 2 is substituted for inlet pipe section 19. This device is useful when a high pressure gas source is available, as in the device of FIG. 2. In the device of FIG. 4, gas and liquid can be fed into the inlet together as described below, in addition to the liquid fed through rod 16. Two or more fluids can be mutually atomized or even chemically reacted or homogenized in this manner.

In FIGS. 5A and 5B, a body member 52 has a bore 50 and a counterbore 51 in alignment with an axis 53. A solid rod 54 is fixed at one end in a bore formed in member 52 and extends therefrom in alignment with axis 53 through bore 50 into counterbore 51. An insert 55 fits in counterbore 51. In alignment with axis 53 there are formed in insert 55 a bore 56, a counterbore 57 at the end of bore 56 facing toward the end of rod 54, and a concave semispherical outlet surface 58 at the end of bore 56 facing away from rod 54. A shallow concave conical surface 63 is formed where surface 58 joins the edge of bore 56. A bore 59 and a counterbore 60 aligned with an inlet axis perpendicular to axis 53 are formed in member 52 to open into bore 50.

Bore 59 and counterbore 60 comprise a fluid inlet. Further, bore 59 comprises a restriction in this inlet. Surface 58 comprises a semispherical diverging outlet that opens into the ambient atmosphere. Surface 63 comprises a diverging section between the restriction and the outlet. Bore 50, bore 57, and bore 56 comprise a flow passage from the fluid inlet to the fluid outlet; bore 50 comprises an upstream portion thereof; and counterbore 57 along with bore 56 comprise a downstream portion thereof. Counterbore 57 also provides an abrupt reduction in cross-sectional area of the flow passage. Axis 53 comprises a flow axis with which the flow passage is aligned. Bore 56 comprises a restriction in the downstream portion of the flow passage. The side walls of bore 50 and rod 54 comprise one annulus in the flow passage. The side walls of counterbore 57 and rod 54 comprise a second annulus in the flow passage.

In this embodiment, the annulus formed by the side walls of counterbore 57 and rod 54 are equivalent to the annulus formed in FIG. 1 by frustum 17 · with the exception that a subatmospheric pressure is not generated in the region of the annulus. There is only relevance to the subatmospheric pressure when the liquid to be atomized by cavitational phenomena or "cold boiling" has vapor entrained at atmospheric pressure, and the "cold boiling" potential depends on a subatmospheric ambient. If the fluid to be atomized, however, is pressurized (e.g., 344.75 hPa or even 689.5 hPa over the ambient pressure) then an introduction of the fluid into a reduced pressure region, even though it may be superambient, will result in considerable "cold boiling" and/or the resultant atomization. For this reason, the device will only atomize a liquid under pressure. A liquid under pressure can be atomized by the device when an atomizing gas under pressure and a liquid to be atomized under pressure are supplied together through the inlet to the device. Preferably, the ratio of the gas pressure to the ambient pressure is greater than the critical pressure ratio.

In operation, the gas and liquid pass into the flow passage from the inlet together. As a result of the high gas pressure and the inlet restriction, the gas is slightly supersonic as it enters the flow passage. The presence of rod 54 in front of the supersonic gas gives rise to a standing shockwave and generation of a very large number of vortices. The shockwave is represented at 61, and the vortices are represented at 62 in FIG. 5B. The potential energy, i.e., static pressure, of the gas supplied to the inlet is in effect partly converted to kinetic energy — first as an increase in linear gas velocity, and then as vortices in the flow passage. The vortices pass through the second annulus and combine as they flow through the outlet restriction. The liquid is partially atomized as it leaves bore 59, and becomes fully atomized as it leaves the semispherical diverging outlet in a vortical gas stream.

The supersonic conditions in the main flow passage enhance the vortex formation. The higher the velocity of the gas entering the inlet, the more gas vortices are generated.

In a typical example, the device of FIGS. 5A and 5B would have the following dimensions: diameter of bore 50 — 5.613 mm; length of bore 50 — 5.08 mm; diameter of counterbore 57 — 2.794 mm; length of counterbore 57 — 3.302 mm; diameter of bore 56 — 0.457 mm; length of bore 56 — 1.016 mm; radius of surface 58 — 11.113 mm; length of surface 58 along axis 53 — 0.762 mm; diameter of rod 54 — 1.778 mm; protrusion of rod 54 into counterbore 57 — 1.27 mm; diameter of bore 59 0.457 mm; length of bore 59 — 1.016 mm; angle between conical surface 63 and axis 53 — 60°; length of surface 27 along axis 14 — 0.356 mm; and diameter of counterbore 60 — 0.626 mm. Typical gas and liquid source pressures are 2482.2 hPa and 2482.2 hPa, respectively.

In FIG. 6 a body member 72 has a bore 70 and a counterbore 71 in alignment with an axis 73. Insert 25 (FIG. 1) fits in counterbore 71. A bore 74 is formed in member 72 in alignment with an inlet axis perpendicular to axis 73. Cylindrical inlet member 40 (FIG. 2) fits in bore 74. A solid rod 75 is fixed at one end in a bore formed in member 72 and extends therefrom in alignment with axis 73 through bore 70 into counterbore 71.

In operation, an atomizing gas under pressure and a liquid to be atomized under pressure are supplied together through inlet member 40. The pressure ratio of the gas pressure to the pressure in bore 70 is preferably equal to or greater than the critical pressure ratio, so the gas entering bore 70 is traveling at a supersonic velocity. The presence of semispherical surface 42 permits a higher supersonic velocity to be attained than in the embodiments of FIGS. 5A and 5B. As represented at 76, the presence of rod 75 in the path of the supersonic gas gives rise to a standing shockwave on the side of rod 75 facing toward inlet member 40. As represented at 77, a plurality of vortices are formed in the gas on the side of rod 75 facing away from inlet member 40. The vortex forming gas with the entrained partially atomized liquid flows from bore 70 through the auxiliary passages, the main passage, and restriction in insert 25 as represented at 78 to the outlet of the device where the liquid is completely atomized. As previously described in connection with FIG. 1, the auxiliary passages formed in insert 25 compensate for changes in conditions and form a fan-shaped spray pattern of atomized liquid and gas at the outlet of the device, represented at 79. The diverging semispherical outlet section of insert 25 facilitates reciprocating gas travel. It should be noted that although no frustum is provided as in FIGS. 1 through 4, or no reduction in cross section of the flow passage is provided as disclosed in FIGS. 5A and 5B, good atomization takes place so long as sufficiently high gas and liquid pressure are available. The absence of a frustum would not permit really effective atomization were it not for the highly effective vortex and shock generation due to the inlet restriction (caused by transverse gas feed against the rod) and the attendant synergy between such shockwave energies and vortices as previously noted. Further, the outlet restriction with auxiliary flow passages and transverse rod dynamics creates a further effective vortex forming and amplification mechanism not unlike the bluff bodies (frustums, rods, etc.) and concentric circular annuli.

Typically, in addition to the dimensions given above for insert 25 and inlet member 40, the device of FIG. 6 would have the following dimensions: diameter of bores 41 and 26 — 1.041 mm; diameter of bore 70 — 7.925 mm; length of bore 70 — 7.925 mm; diameter of rod 75 — 1.778 mm; and protrusion of rod 75 into the conical section of insert 25 — 1.016 mm.

Typical gas and liquid source pressures are 1034.25 hPa, and 1034.25 hPa, respectively.

Atomizing gas under pressure is supplied to inlet section 19. At any pressure the atomizing gas is sufficient to create a subatmospheric pressure at the restriction of insert 25. As an option, liquid to be atomized could also be additionally supplied through hollow rod 16 as in FIG. 1. Two or more fluids can thus be homogenized, chemically reacted, combusted, or mixed. Two or more entry ports can be made into the low pressure region of the restriction.

As previously mentioned, the stated dimensions of the devices disclosed herein are merely exemplary, providing the best known mode of operation of the invention. the stated dimensions can be scaled up or down in size to accommodate differing gas and liquid flow rates and pressures. In all cases, it is preferable, but not necessary, that the different cross-sectional areas in the flow passages are multiples of each other — for example, the first annulus, the second annulus, the outlet restriction, the auxiliary passages, where applicable, the inlet restriction, where applicable, and in the embodiment of FIGS. 5A and 5B the portion of the flow passage downstream of the rod.

The devices disclosed herein could be machined from metal or molded from plastic. The parts are designed to be easily interchangeable and cheaply produced. For example, plug 15, rod 16, and frustum 17 could be molded as a single part, inserts 25 and 55 could each be molded as a single part, inlet member 40 could be molded as a single part, and member 52 and rod 54 could be molded as a single part.

The described embodiments of the invention are only considered to be preferred and illustrative of the inventive concept. For example, in addition to atomization, the invention can be used in any number of fluid energizing and/or mixing operations for gas and/or liquid, and flow measurement and control. Although two diametrically opposed auxiliary passages as disclosed, is preferred, a single auxiliary passage or more than two may also provide some of the enumerated benefits of the auxiliary passages to some extent. The higher the velocity of the gas entering the upstream portion of the main passage from the inlet restriction, the larger is the number of generated vortices and the greater is the atomizing power. For this reason, it is preferable to establish the critical pressure ratio across the inlet restriction because that results in sonic velocity flow conditions in the upstream portion of the main passage. However, a smaller increase in the number of vortices generated also results, vis-a-vis a device without an inlet restriction, if the pressure ratio across the inlet restriction is less than the critical value. Insert 25 and insert 55 function in a fashion analogous to a lens in that they focus the vortex containing gas at the outlet restriction; both the auxiliary passages and the collecting section of these inserts contribute to the focusing function.

## Claims

1. A vortex generating device having a main flow passage (11, 12) having a flow axis (14), a fluid inlet (19) connected with the flow passage (11, 12) under an angle with respect to the flow axis (14), a restriction (25) located in the downstream end of the flow passage and defining an outlet (26) opening into a region at ambient pressure, and a rod (16) extending along the flow axis, characterized in that at least one auxiliary flow passage (30, 32) connects the main flow passage (11) to the opening (26) in the restriction (25), whereby vortices move along the rod (16) and flow axis (14) and through the auxiliary flow passage (30, 32) to meet in the opening (26).

2. The device according to claim 1 in which a pair of flow passages (30, 32 and 31, 33) connect the main flow passage (11) to the opening (26) in the restriction (25) to enhance the formation of vortices at the outlet.

3. The device according to claim 1 or 2 in which the flow passages open into the restriction (25) from diametrically opposite directions.

4. The device according to any of the claims 1 to 3 in which at least one auxiliary passageway (30, 32) interconnects the main flow passage and the outlet (26) such that energy is applied to the gas at an angle with respect to the direction in which the gas passes through the outlet (26).

5. The device according to any of the claims 1 to 4 in which the auxiliary flow passages (30, 32 and 31, 33) open into the restriction (25) transverse to the flow axis (14).

6. The device according to any of the claims 1 to 5 in which the auxiliary flow passages (30, 32 and 31, 33) open into the upstream portion (11) of the main flow passage in directions parallel to the flow axis.

7. The device according to any of the claims 1 to 6 characterized in that a conical vortex collection section (27) is located adjacent the downstream end of the main flow passage (11, 12).

8. The device according to claim 7 in which the restriction (25) is a cylindrical section, comprising the conical vortex collecting section (27), the auxiliary flow passages (30, 32 and 31, 33) opening into the upstream portion (11) of the main flow passage through the conical vortex collecting section (27).

9. The device according to any of the claims 1 to 8 in which the rod (16) ends at the conical vortex collecting section (27).

10. The device according to any of the claims 1 to 6 in which the rod (16) ends at the outlet (26).

11. The device according to any of the claims 1 to 10 in which the rod is solid.

12. The device according to any of the claims 1 to 10 in which the rod (16) is hollow for admitting a liquid to the device.

13. The device according to any of the claims 1 to 12, additionally comprising a concave outlet section (28).

14. The device according to claim 13 in which the concave outlet section (28) is diverging and communicating with the outlet (26).

15. The device according to claim 13 or 14 in which the rod (16) extends beyond the concave outlet section (28).

16. The device according to any of the claims 1 to 15 in which the fluid inlet includes a restriction (41) and the pressure of the fluid at the inlet is sufficient to cause the fluid to flow through the restriction at sonic velocity.

17. The device according to claim 16 in which the restriction (41) communicates with a concave semispherical inlet section (42).

18. The device according to any of the claims 1 to 17 in which a bluff body (17) is located on the rod (16) at a location between the inlet (19) and the restriction (25).

19. The device according to any of the claims 1 to 18 in which the rod (16) is hollow with the downstream end having a cylindrical opening for emitting a liquid to be atomized.

20. A vortex generating device having a main flow passage (50, 57) having a flow axis (53), the main flow passage having an upstream and a downstream portion, a fluid inlet (60) connected with the upstream portion under an angle with respect to the flow axis (53), a restriction (55) located in the downstream portion and defining an outlet (56), opening into a region at ambient pressure, and a rod (54) extending along the flow axis, characterized in that the main flow passage includes an intermediate section (57) at its downstream end of smaller cross-section than the upstream portion (50) and of larger cross-section than the fluid outlet (56).

21. The device according to any of the preceding claims in which a liquid and a gas are applied to the inlet (19, 43, 60) together.

22. The device according to claim 20 or 21 in which there is a restriction (59) at the fluid inlet (60).

23. The device according to claim 22 in which the pressure of the gas is sufficiently larger than the ambient pressure to cause the gas to pass through the inlet (60) at sonic velocity.

24. The device according to any of the claims 20 to 23 in which the rod (54) extends through the upstream portion (50) and through only part of the intermediate section (57).

25. The device according to any of the claims 20 to 24 additionally comprising a concave outlet section (58).

26. The device according to claim 25 in which the concave outlet section (58) is diverging and communicating with the outlet (56).

**Revendications**

1. Dispositif générateur de tourbillons ayant un passage de courant principal (11, 12) avec un axe d'écoulement (14), une entrée de fluide (19) raccordée au passage de courant (11, 12) en faisant un angle avec l'axe d'écoulement (14), un étranglement (25) disposé dans l'extrémité aval du passage de courant et définissant une sortie (26) débouchant dans une région à la pression ambiante, et une tige (16) s'étendant selon l'axe d'écoulement, caractérisé en ce qu'au moins un passage de courant auxiliaire (30, 32) raccorde le passage de courant principal (11) à l'ouverture (26) dans l'étranglement (25), d'où il résulte que des tourbillons se déplacent le long de la tige (16) et de l'axe d'écoulement (14) et traversent le passage de courant auxiliaire (30, 32) pour se rejoindre dans l'ouverture (26).

2. Dispositif selon la revendication 1, dans lequel deux passages de courant (30, 32 et 31, 33) raccordent le passage de courant principal (11) à l'ouverture (26) dans l'étranglement (25) pour renforcer la formation de tourbillons au niveau de la sortie.

3. Dispositif selon la revendication 1 ou 2, dans lequel les passages de courant débouchent dans l'étranglement (25) depuis des directions diamétralement opposées.

4. Dispositif selon l'une des revendications 1 à 3, dans lequel au moins un passage auxiliaire (30, 32) raccorde entre eux le passage de courant principal et la sortie (26) de telle sorte que le l'énergie est appliquée sur le gaz en faisant un angle par rapport à la direction dans laquelle le gaz traverse la sortie (26).

5. Dispositif selon l'une quelconque des revendications 1 à 4, dans lequel les passages de courant auxiliaires (30, 32 et 31, 33) débouchent dans l'étranglement (25) transversalement à l'axe d'écoulement (14).

6. Dispositif selon l'une quelconque des revendications 1 à 5, dans lequel les passages de courant auxiliaires (30, 32 et 31, 33) débouchent dans la portion amont (11) du passage de courant principal dans des directions parallèles à l'axe d'écoulement.

7. Dispositif selon l'une quelconque des revendications 1 à 6, caractérisé en ce qu'une section collectrice de tourbillons conique (27) est disposée adjacente à l'extrémité aval du passage de courant principal (11, 12).

8. Dispositif selon la revendication 7, dans lequel l'étranglement (25) est une section cylindrique, comprenant la section collectrice de tourbillons conique (27), les passages de courant auxiliaires (30, 32 et 31, 33) débouchant dans la portion amont (11) du passage de courant principal à travers la section collectrice de tourbillons conique (27).

9. Dispositif selon l'une quelconque des revendications 1 à 8, dans lequel la tige (16) se termine au niveau de la section collectrice de tourbillons conique (27).

10. Dispositif selon l'une quelconque des revendications 1 à 6, dans lequel la tige (16) se termine au niveau de la sortie (26).

11. Dispositif selon l'une quelconque des revendications 1 à 10, dans lequel la tige est massive.

12. Dispositif selon l'une quelconque des revendications 1 à 10, dans lequel la tige (16) est creuse pour admettre un liquide dans le dispositif.

13. Dispositif selon l'une quelconque des revendications 1 à 12, comprenant en outre une section de sortie concave (28).

14. Dispositif selon la revendication 13, dans lequel la section de sortie concave (28) est divergente et communique avec la sortie (26).

15. Dispositif selon la revendication 13 ou 14, dans lequel la tige (16) s'étend au-delà de la section de sortie concave (28).

16. Dispositif selon l'une quelconque des revendications 1 à 15, dans lequel l'entrée de fluide comporte un étranglement (41) et la pression du fluide au niveau de l'entrée est suffisante pour amener le fluide à traverser l'étranglement à une vitesse sonique.

17. Dispositif selon la revendication 16, dans lequel l'étranglement (41) communique avec une section d'entrée hémisphérique concave (42).

18. Dispositif selon l'une quelconque des revendications 1 à 17, dans lequel un corps de tourbillon (17) est disposé sur la tige (16) à un endroit situé entre l'entrée (19) et l'étranglement (25).

19. Dispositif selon l'une quelconque des revendications 1 à 18, dans lequel la tige (16) est creuse avec son extrémité aval comportant une ouverture cylindrique pour projeter un liquide à atomiser.

20. Dispositif générateur de tourbillons ayant un passage de courant principal (50, 57) avec un axe d'écoulement (53), le passage de courant principal ayant une portion amont et une portion aval, une entrée de fluide (60) raccordée à la portion amont en faisant un angle par rapport à l'axe d'écoulement (53), un étranglement (55) disposé dans la portion aval et définissant une sortie (56) s'ouvrant dans une région à la pression ambiante, et une tige (54) s'étendant selon l'axe d'écoulement, caractérisé en ce que le passage de courant principal comporte à son extrémité aval une section intermédiaire (57) dont la section transversale est plus petite que celle de la portion amont (50) et plus grande que celle de la sortie de fluide (56).

21. Dispositif selon l'une quelconque des revendications précédentes, dans lequel un liquide et un gaz sont amenés ensemble à l'entrée (19, 43, 60).

22. Dispositif selon la revendication 20 ou 21, dans lequel il y a un étranglement (59) au niveau de l'entrée de fluide (60).

23. Dispositif selon la revendication 22, dans lequel la pression du gaz est suffisamment supérieure à la pression ambiante pour amener le gaz à travers cette entrée (60) à une vitesse sonique.

24. Dispositif selon l'une quelconque des revendications 20 à 23, dans lequel la tige (54) s'étend à travers la portion amont (50) et seulement à travers une partie de la section intermédiaire (57).

25. Dispositif selon l'une quelconque des revendications 20 à 24, comportant en outre une section de sortie concave (58).

26. Dispositif selon la revendication 25, dans lequel la section de sortie concave (58) est divergente et communique avec la sortie (56).

**Patentansprüche**

1. Vorrichtung zur Erzeugung von Wirbeln mit einem Hauptströmungsdurchlaß (11, 12), der eine Strömungsachse (14) aufweist, einem unter einem Winkel in Bezug auf die Strömungsachse (14) mit dem Strömungsdurchlaß (11, 12) verbundenen Fluideinlaß (19), einer Verengung (25), die in dem stromabwärtigen Ende des Strömungsdurchlasses angeordnet ist und eine Auslaßöffnung (26) in einen Bereich mit Umgebungsdruck festlegt und einer sich längs der Strömungsachse erstreckenden Stange (16), dadurch gekennzeichnet, daß wenigstens ein zusätzlicher Strömungsdurchlaß (30, 32) den Hauptströmungsdurchlaß (11) mit der Öffnung (26) in der Verengung (25) verbindet, wodurch sich Wirbel längs der Stange (16) und der Strömungsachse (14) und durch den zusätzlichen Strömungsdurchlaß (30, 32) bewegen, um sich in der Öffnung (26) zu treffen.

2. Vorrichtung nach Anspruch 1, bei der ein Paar Strömungsdurchlässe (30, 32 und 31, 33) den Hauptströmungsdurchlaß (11) mit der Öffnung (26) in der Verengung (25) verbinden, um die Wirbelbildung am Auslaß zu steigern.

3. Vorrichtung nach Anspruch 1 oder 2, bei der die Strömungsdurchlässe in die Verengung (25) aus auf einem Durchmesser gegenüberliegenden Richtungen münden.

4. Vorrichtung nach einem der Ansprüche 1 bis 3, bei der wenigstens ein zusätzlicher Durchlaß (30, 32) den Hauptströmungsdurchlaß und den Auslaß (26) derart verbindet, daß dem Gas Energie unter einem Winkel in Bezug auf die Richtung zugeführt wird, in der das Gas durch den Auslaß (26) strömt.

5. Vorrichtung nach einem der Ansprüche 1 bis 4, bei der sich die zusätzlichen Strömungsdurchlässe (30, 32 und 31, 33) quer zu der Strömungsachse (14) in die Verengung öffnen.

6. Vorrichtung nach einem der Ansprüche 1 bis 5, bei der sich die zusätzlichen Strömungsdurchlässe (30, 32 und 31, 33) in den stromaufwärtigen Abschnitt (11) des Hauptströmungsdurchlasses in zu der Strömungsachse parallelen Richtungen öffnen.

7. Vorrichtung nach einem der Ansprüche 1 bis 6, dadurch gekennzeichnet, daß ein konischer Wirbelsammelabschnitt (27) nahe dem stromabwärtigen Ende des Hauptströmungsdurchlasses (11, 12) angeordnet ist.

8. Vorrichtung nach Anspruch 7, bei der die Verengung (25) einen zylindrischen Abschnitt aufweist, der den konischen Wirbelsammelabschnitt (27) umfaßt, und bei der sich die zusätzlichen Strömungsdurchlässe (30, 32 und 31, 33) in den stromaufwärtigen Abschnitt (11) des Hauptströmungsdurchlasses durch den konischen Wirbelsammelabschnitt (27) hindurch öffnen.

9. Vorrichtung nach einem der Ansprüche 1 bis 8, bei der die Stange (16) bei dem konischen Wirbelsammelabschnitt (27) endet.

10. Vorrichtung nach einem der Ansprüche 1 bis 6, bei der die Stange (16) an dem Auslaß (26) endet.

11. Vorrichtung nach einem der Ansprüche 1 bis 10, bei der die Stange massiv ist.

12. Vorrichtung nach einem der Ansprüche 1 bis 10, bei der die Stange (16) hohl ist, um eine Flüssigkeit zu der Vorrichtung zuzulassen.

13. Vorrichtung nach einem der Ansprüche 1 bis 12, die zusätzlich einen konkaven Auslaßabschnitt (28) umfaßt.

14. Vorrichtung nach Anspruch 13, bei der der konkave Auslaßabschnitt (28) divergiert und mit dem Auslaß (26) in Verbindung steht.

15. Vorrichtung nach Anspruch 13 oder 14, bei der sich die Stange (16) über den konkaven Auslaßabschnitt (28) hinaus erstreckt.

16. Vorrichtung nach einem der Ansprüche 1 bis 15, bei der der Fluideinlaß eine Verengung (41) aufweist und der Fluiddruck an dem Einlaß ausreicht, zu bewirken, daß das Fluid durch die Verengung mit Schallgeschwindigkeit hindurchströmt.

17. Vorrichtung nach Anspruch 16, bei der die Verengung (41) mit einem konkaven, halbkugelförmigen Einlaßabschnitt (42) in Verbindung steht.

18. Vorrichtung nach einem der Ansprüche 1 bis 17, in der ein Wirbelkörper (17) an der Stange (16) an einer Stelle zwischen dem Einlaß (19) und der Verengung (25) angeordnet ist.

19. Vorrichtung nach einem der Ansprüche 1 bis 18, bei der die Stange (16) hohl ist, wobei das stromabwärtige Ende eine zylindrische Öffnung zum Austragen einer zu zerstäubenden Flüssigkeit aufweist.

20. Vorrichtung zum Erzeugen von Wirbeln mit einem Hauptströmungsdurchlaß (50, 57), der eine Strömungsachse (53) aufweist, wobei der Hauptströmungsdurchlaß einen stromaufwärtigen und einen stromabwärtigen Abschnitt aufweist, einem unter einem Winkel in Bezug auf die Strömungsachse (53) mit dem stromaufwärtigen Abschnitt verbundenen Fluideinlaß (60), einer Verengung (55), die in dem stromabwärtigen Abschnitt angeordnet ist und einen Auslaß (56) festlegt, der sich in einen Bereich mit Umgebungsdruck öffnet, und einer Stange (54), die sich längs der Strömungsachse erstreckt, dadurch gekennzeichnet, daß der Hauptströmungsdurchlaß einen Zwischenabschnitt (57) aufweist, der an seinem stromabwärtigen Ende einen kleineren Querschnitt als der stromaufwärtige Abschnitt (50) und einen größeren Querschnitt als der Fluidauslaß (56) aufweist.

21. Vorrichtung nach einem der vorhergehenden Ansprüche, bei der eine Flüssigkeit und ein Gas gemeinsam den Einlaß (19, 43, 60) beaufschlagen.

22. Vorrichtung nach Anspruch 20 oder 21, bei der sich eine Verengung (59) bei dem Fluideinlaß (60) befindet.

23. Vorrichtung nach Anspruch 22, bei der der Gasdruck ausreichend größer als der Umgebungsdruck ist, damit das Gas durch den Einlaß (60) mit Schallgeschwindigkeit hindurchgeht.

24. Vorrichtung nach einem der Ansprüche 20 bis 23, bei der sich die Stange (64) durch den stromaufwärtigen Abschnitt (50) hindurch und nur durch einen Teil des Zwischenabschnittes (57) erstreckt.

25. Vorrichtung nach einem der Ansprüche 20 bis 24, wobei zusätzlich ein konkaver Auslaßabschnitt (58) vorgesehen ist.

26. Vorrichtung nach Anspruch 25, bei der der konkave Auslaßabschnitt (58) divergierend ist und mit dem Auslaß (56) in Verbindung steht.

*Fig. 1*

*Fig. 2*

Fig. 3

Fig. 4

## Fig. 5A

## Fig. 5B

Fig. 6